# EUROPEAN PATENT APPLICATION

(11) **EP 4 697 694 A1**
(43) Date of publication of application: **18.02.2026**
(21) Application number: 24787807.7
(22) Date of filing: 20.02.2024
(51) Int. Cl.: H04N 1/00, H04N 13/194

(54) **THREE-DIMENSIONAL RECONSTRUCTION METHOD AND APPARATUS, ELECTRONIC DEVICE AND COMPUTER-READABLE STORAGE MEDIUM**

(30) Priority: 14.04.2023 CN 202310421383
(71) Applicant: Shining 3D Tech Co., Ltd., Hangzhou, Zhejiang 311258 (CN)
(72) Inventor: MA, Chao, Hangzhou, Zhejiang 311258 (CN); ZHAO, Xiaobo, Hangzhou, Zhejiang 311258 (CN); CHEN, Xiaojun, Hangzhou, Zhejiang 311258 (CN); FANG, Binbin, Hangzhou, Zhejiang 311258 (CN); ZHANG, Huiquan, Hangzhou, Zhejiang 311258 (CN)
(74) Representative: Metida
(86) International application number: PCT/CN2024/077732
(87) International publication number: WO 2024/212701

(57) **Abstract**

The present application discloses a three-dimensional reconstruction method, an apparatus, an electronic device and a computer-readable storage medium. The three-dimensional reconstruction method includes: a scanner acquiring data of a target scene, wherein the data includes an area of a target object; the scanner encoding and compressing the data to obtain encoded-and-compressed data; the scanner sending the encoded-and-compressed data to a computer terminal, so that the computer terminal performs a three-dimensional reconstruction or performs a display three-dimensionally using the encoded-and-compressed data to obtain a three-dimensional model of the target object; the scanner may switch data transmission modes between the scanner and the computer terminal, where the data transmission modes include a wireless transmission and a wired transmission, and may improve an efficiency of the wireless transmission while improving a user experience.

## Description

### CROSS-REFERENCE TO RELATED APPLICATIONS

The present application claims a priority to a Chinese patent application filed with the China National Intellectual Property Administration on April 14, 2023, with an application number 202310421383.9 and entitled "THREE-DIMENSIONAL RECONSTRUCTION METHOD, APPARATUS, ELECTRONIC DEVICE AND COMPUTER-READABLE STORAGE MEDIUM", entire contents of which are incorporated by reference in the present application.

### TECHNICAL FIELD

The present application relates to a field of three-dimensional reconstruction, and in particular to a three-dimensional reconstruction method, an apparatus, an electronic device and a computer-readable storage medium.

### BACKGROUND

A three-dimensional reconstruction is a process of establishing a mathematical model suitable for representing and processing by a computer for a three-dimensional object, and reconstructing three-dimensional information based on a single-view image or multi-view images of the three-dimensional object.

Taking an oral medical field as an example, an application of three-dimensional reconstruction may be a three-dimensional reconstruction of a model for teeth and gums based on multiple views of the teeth and gums in the mouth. For example, when a scanner is used to collect two-dimensional images of a patient's teeth and gums in multiple views, multiple two-dimensional images of the teeth and gums may be obtained. Based on the multiple two-dimensional images of the teeth and gums, the teeth and gums may be three-dimensionally reconstructed to obtain a three-dimensional model of the teeth and gums. However, in a three-dimensional reconstruction process, data collected by the scanner needs to be transmitted to a computer terminal for processing, and a data transmission between the scanner and the computer terminal may only be achieved through cables. Due to the constraints of cables, a user experience is poor and the cost of using cables is high.

### SUMMARY

In response to the above technical problems, the present application provides a three-dimensional reconstruction method, an apparatus, an electronic device and a computer-readable storage medium, and technical solutions are as follows.

According to a first aspect of the present application, a three-dimensional reconstruction method applied to a scanner is provided, the scanner is capable of switching between data transmission modes between the scanner and a computer terminal, the data transmission modes comprise a wireless transmission and a wired transmission, and the method comprises: acquiring data of a target scene, the data comprising an area of a target object; obtaining encoded-and-compressed data by encoding and compressing the data; transmitting the encoded-and-compressed data to the computer terminal, and enabling the computer terminal to perform a three-dimensional reconstruction using the encoded-and-compressed data or to perform a display three-dimensionally using the encoded-and-compressed data, thereby obtaining a three-dimensional model of the target object.

According to a second aspect of the present application, a three-dimensional reconstruction method applied to a computer terminal is provided, the computer terminal is capable of switching between data transmission modes between the computer terminal and a scanner, the data transmission modes comprise a wireless transmission and a wired transmission, and the method comprises: receiving encoded-and-compressed data transmitted by the scanner, the encoded-and-compressed data being obtained by the scanner by acquiring data of a target scene and encoding and compressing the data, the data comprising an area of a target object;

Obtaining a three-dimensional model of the target object by performing a three-dimensional reconstruction using the encoded-and-compressed data or performing a display three-dimensionally using the encoded-and-compressed data.

According to a third aspect of the present application, a three-dimensional reconstruction apparatus is provided, which is capable of switching between data transmission modes between the three-dimensional reconstruction apparatus and a computer terminal, the data transmission modes comprise a wireless transmission and a wired transmission, and the apparatus comprises: an acquisition unit, being configured to acquire data of a target scene, the data comprising an area of a target object; an encoding-and-compressing unit, being configured to encode and compress the data to obtain encoded-and-compressed data; a transmitting unit, being configured to transmit the encoded-and-compressed data to the computer terminal, and enable the computer terminal to perform a three-dimensional reconstruction using the encoded-and-compressed data or to perform a display three-dimensionally using the encoded-and-compressed data, thereby obtain a three-dimensional model of the target object.

According to a fourth aspect of the present application, a three-dimensional reconstruction apparatus is provided, which is capable of switching between data transmission modes between the three-dimensional reconstruction apparatus and a scanner, the data transmission modes comprise a wireless transmission and a wired transmission, and the apparatus comprises: a receiving unit, being configured to receive encoded-and-compressed data transmitted by the scanner, the encoded-and-compressed data is obtained by the scanner by acquiring data of a target scene; and encoding and compressing the data, the data comprising an area of the target object; a three-dimensional reconstruction unit, being configured to perform a three-dimensional reconstruction using the encoded-and-compressed data or to perform a display three-dimensionally using the encoded-and-compressed data to obtain a three-dimensional model of the target object.

According to a fifth aspect of the present application, an electronic device is provided, the electronic device comprises: a processor; a storage device configured for storing instructions executable by the processor; the processor is configured to implement the method described in the first aspect or the second aspect.

According to a sixth aspect of the present application, a computer-readable storage medium having a computer program stored thereon, which when executed by a processor, steps of the method described in the first aspect or the second aspect are implemented.

It should be understood that the foregoing general description and the following detailed description are exemplary and explanatory only and are not restrictive of the present application.

### BRIEF DESCRIPTION OF THE DRAWINGS

In order to more clearly illustrate technical solutions in the embodiments of the present application, drawings required for use in the description of the embodiments will be briefly introduced below. Obviously, the drawings described below are only some embodiments recorded in the present application . For the skilled in the art, other drawings may also be obtained based on these drawings.
FIG. 1 is a schematic diagram of a three-dimensional reconstruction scene provided by the present application;
FIG. 2 is a schematic diagram of a system architecture for a three-dimensional reconstruction provided by one embodiment of the present application;
FIG. 3 is a schematic diagram of a flow chart of a three-dimensional reconstruction method provided by one embodiment of the present application;
FIG. 4 is a schematic diagram a flow chart of a three-dimensional reconstruction method provided by one embodiment of the present application;
FIG. 5 is a schematic diagram of an encoding-and-decoding process provided by one embodiment of the present application;
FIG. 6 is a schematic structural diagram of a three-dimensional reconstruction apparatus provided by one embodiment of the present application;
FIG. 7 is a schematic structural diagram of a three-dimensional reconstruction apparatus provided by another embodiment of the present application;
FIG. 8 is a schematic diagram of a structure of an electronic device provided by one embodiment of the present application.

### DETAILED DESCRIPTION

In order to enable those skilled in the art to better understand the technical solutions in the present application, the technical solutions in the embodiments of the present application will be described in detail below in conjunction with the drawings in the embodiments of the present application. Obviously, the described embodiments are only part of the embodiments of the present application, not all of the embodiments. Based on the embodiments in the present application, all other embodiments obtained by the skilled in the art should fall within the scope of protection of the present application.

First, a three-dimensional reconstruction scene is introduced. A three-dimensional reconstruction is a process of establishing a mathematical model suitable for representing and processing by a computer for a three-dimensional object, and reconstructing three-dimensional information based on a single-view image or multi-view images of the three-dimensional object. The three-dimensional reconstruction may be applied to a variety of scenes. The following takes an oral cavity scene as an example to illustrate the application of the three-dimensional reconstruction in teeth and gums in an oral cavity:

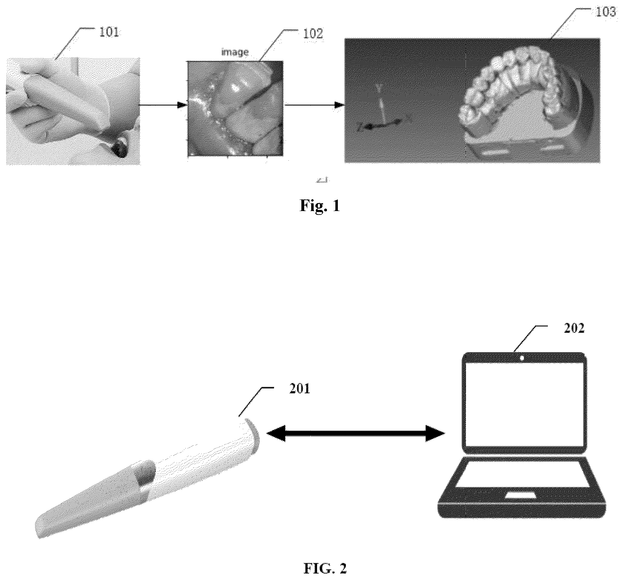

Please refer to FIG. 1. In an oral medicine field, the application of the three-dimensional reconstruction may be to perform a three-dimensional reconstruction or to perform a display three-dimensionally of a model of teeth and gums based on multiple views of the teeth and gums in the oral cavity. For example, when a scanner 101 is used to collect two-dimensional images of multiple views of a patient's teeth and gums, multiple two-dimensional images 102 of the teeth and gums may be obtained. Based on the multiple two-dimensional images 102 of the teeth and gums, the teeth and gums may be three-dimensionally reconstructed or three-dimensionally displayed to obtain a three-dimensional model 103 of the teeth and gums.

Please refer to FIG. 2. During the three-dimensional reconstruction process, data collected by a scanner 201 needs to be transmitted to a computer terminal 202 for processing. In the related art, a data transmission is achieved between the scanner 201 and the computer terminal 202 through a cable. Due to constraints of the cable, a user experience is poor and a cost of using the cable is high.

It should be noted that, in the above-mentioned oral cavity scene, the three-dimensional reconstruction of teeth and gums is an exemplary description. In actual applications, in addition to the oral cavity scene, embodiments of the present application may also be applied to the three-dimensional reconstruction or three-dimensional display of other scenes, such as the three-dimensional reconstruction scene or the three-dimensional display scene by scanning an inside of an ear through an in-ear scanner, the three-dimensional reconstruction scene or the three-dimensional display scene of scanning a face through a facial scanner, etc. There is no specific limitation on the three-dimensional reconstruction scene or the three-dimensional display scene of the application of the embodiments of the present application.

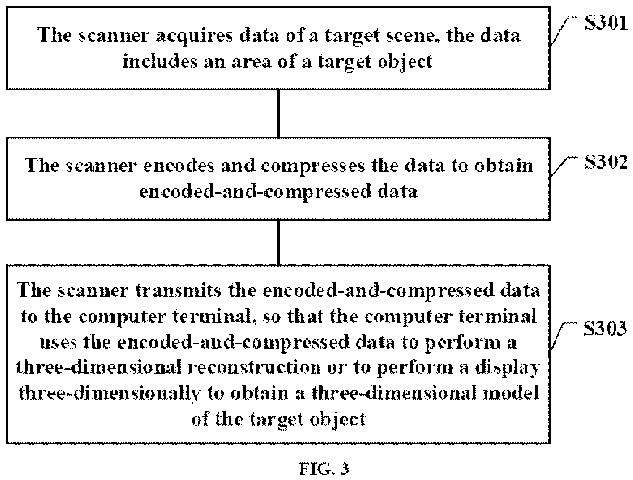

In view of the above problems, the present application provides a three-dimensional reconstruction method to avoid the constraints of a cable transmission between the scanner and the computer terminal, and improve an efficiency of the data transmission while improving the user experience. As shown in FIG. 3, the method includes steps S301 to S303.
S301, the scanner acquires data of a target scene, the data includes an area of a target object;
S302, the scanner encodes and compresses the data to obtain encoded-and-compressed data;
S303, the encoded-and-compressed data are transmitted to the computer terminal, so that the computer terminal uses the encoded-and-compressed data to perform a three-dimensional reconstruction or to perform a three-dimensional display to obtain a three-dimensional model of the target object.

The scanner may switch between data transmission modes between the scanner and the computer terminal, and the data transmission modes include a wireless transmission and a wired transmission.

The technical solution provided by the present application is that the scanner may switch between data transmission modes between the scanner and the computer terminal. In addition to being able to exchange data with the computer terminal in a wired transmission mode, the scanner may also switch to a wireless transmission mode to interact with the computer terminal. That is, a connection state between the scanner and the computer terminal may be switched as needed. The connection state may be a wired connection or a wireless connection. When the scanner is wirelessly connected to the computer terminal, the collected data may be transmitted to the computer terminal in the wireless transmission mode, so that the computer terminal may use the data to perform the three-dimensional reconstruction or to perform the display three-dimensionally, avoiding the constraints of the cable transmission between the scanner and the computer terminal, improving the user experience, and reducing costs of the data transmission. At the same time, the data collected by the scanner is encoded and compressed before transmitted wirelessly may reduce a burden on a wireless communication link and improve the efficiency of wireless transmission.

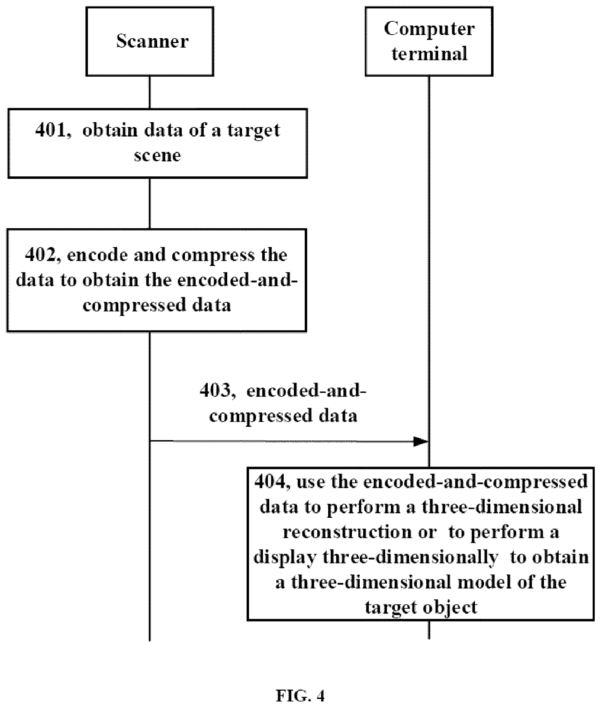

In one embodiment of the present application, the scanner may pre-process images that are collected using a plurality of methods before transmitting the data to the computer terminal. Specifically, multiple embodiments are provided. A first embodiment is described below. For a specific execution process of the first embodiment, please refer to FIG. 4. The first embodiment of the three-dimensional reconstruction method provided in the present application may include steps 401 to 404.

401, the scanner obtains data of a target scene;
The data of the target scene may include an area of a target object.

As an example, the data of the target scene may be images, image feature data or three-dimensional point cloud data, or a combination of the images, the image feature data and the three-dimensional point cloud data. The image feature data and the three-dimensional point cloud data may be obtained based on an image processing or by other processing methods. There is no specific limitation on the form of the data and the method of obtaining the image feature data and the three-dimensional point cloud data.

As an example, the target scene may be an oral cavity scene, and the target object may include a tooth and a gum.

As an example, the target object may also include a tooth, a gum, and a soft tissue, and the soft tissue may refer to a movable part in the oral cavity, such as a buccal and lingual soft tissue, etc. There is no specific limitation on the target scene and the target object.

As an example, the scanner may include a power supply unit, which may include a charging module and a battery module. The charging module may charge the battery module by a wireless charging mode or a connector charging mode, and the battery module may provide power to the scanner when the scanner is in a non-working state.

As an example, when the charging module charges the battery module in a wireless charging mode, the wireless charging mode may include a contact wireless charging mode or a contactless wireless charging mode, and the wireless charging mode is not specifically limited.

As an example, the battery module may have functions including a power display and a low-power reminder to feed back power information to an operator in real time.

402, the scanner encodes and compresses the data to obtain the encoded-and-compressed data;
As an example, the data of the target scene acquired by the scanner may be selectively encoded, compressed and transmitted. For example, when the data of the target scene is an image, entire content of the image may be compressed and transmitted. When the data of the target scene is image feature data, only the image feature data may be compressed and transmitted.

Considering a transmission volume of the data, if the data between the scanner and a computing device is transmitted by a wireless transmission method, such as a WIFI transmission method, the WIFI transmission method is susceptible to external interference and may usually only reach a stable transmission rate of 30MB/s. If it is directly used for the data transmission of the scanner, it may affect a transmission efficiency and cause problems such as scanning jams and un-smoothness that affect the user experience. Therefore, it is necessary to compress the data collected by the scanner before transmitting. The following provides a plurality of solutions for encoding and compression:
As an example, a method for obtaining the encoded-and-compressed data may be to stitch and encode and compress multiple frames of data in the data according to a preset time period to obtain the encoded-and-compressed data, so as to improve the efficiency of the encoding and compression.

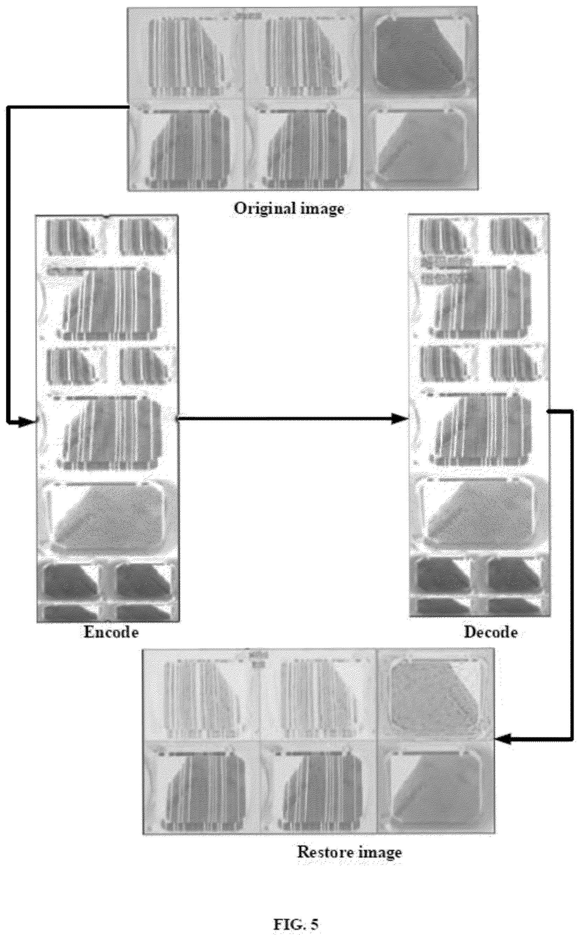

Please refer to FIG. 5. As an example, the scanner may include at least two cameras, and the data may include data collected by the at least two cameras. The method for obtaining the encoded-and-compressed data may be to stitch and encode and compress multiple frames of data collected by the at least two cameras according to a preset time period to obtain the encoded-and-compressed data, thereby avoiding encoding data of each camera separately. Even if there are multiple cameras, only need to encoding for one time, which may further improve the efficiency of encoding and compression, and solve a asynchrony problem between cameras in a multi-camera scene, thereby improving an overall efficiency of the three-dimensional reconstruction or the three-dimensional display.

As an example, the scanner may include one camera, and the data may include data captured by one camera. The method for obtaining the encoded-and-compressed data may be to stitch and encode and compress multiple frames of data in the data captured by the camera according to a preset time period to obtain the encoded-and-compressed data, which may improve the efficiency of encoding and compression, thereby improving the overall efficiency of the three-dimensional reconstruction or the three-dimensional display.

It is worth noting that the number of cameras included in the scanner is only an example. In actual applications, other numbers of cameras are not excluded and there is no specific limitation on this.

In order to avoid a noise caused by a misalignment during the three-dimensional reconstruction and a problem of low mapping accuracy, according to a three-dimensional reconstruction principle, as an example, the preset time period may be 20ms. The preset time period may also be appropriately changed according to a limitation of the three-dimensional reconstruction principle, and a specific value of the preset time period is not limited.

It should be noted that the "stitching" in the related art refers to stitching multiple images with overlapping parts into one panoramic image, while the "stitching" described in the embodiments of the present application refers to stitching images captured by different cameras into a combined image, which includes images captured by different cameras.

As an example, the scanner may include a black-and-white camera and a color camera, and the data may include data collected by the black-and-white camera and data collected by the color camera. For example, the "stitching" described in the embodiments of the present application may refer to stitching the data collected by the black-and-white camera and the data collected by the color camera into a combined image, for example, stitching and encoding and compressing multiple frames of data in the data collected by the black-and-white camera and the color camera in a preset time period of 20ms. It is worth noting that the above-mentioned encoding and compression method is only an exemplary display. In actual applications, other encoding and compression methods are not excluded, and there is no specific limitation on this.

As an example, the scanner may include a field programmable gate array (FPGA) chip or a digital signal processor (DSP) chip, and the method for obtaining the encoded-and-compressed data may be to extract, encode and compress, through the FPGA chip or the DSP chip, stripes in the data that has been stitched to obtain the encoded-and-compressed data. It is worth noting that the above-mentioned (FPGA) chip or the digital signal processor (DSP) chip is only an exemplary display. In actual applications, other implementation methods are not excluded, such as application-specific integrated circuits (ASICs), and no specific limitation is made to this.

Since the data is encoded and compressed before transmitting wirelessly, a burden of output data volume and high-speed computing requirements of the computer terminal are relatively high. As an example, the FPGA chip or the DSP chip may be built into a host of the scanner, so that a small amount of chip-level calculations may be performed on the collected data on the scanner to reduce a pressure of data transmission and a computing burden of the computer terminal.

403, the scanner transmits the encoded-and-compressed data to the computer terminal;
The scanner may switch between data transmission modes between the scanner and the computer terminal, and the data transmission modes may include a wireless transmission and a wired transmission.

As an example, when the data transmission mode is the wireless transmission, the computer terminal may be wirelessly connected to the scanner through WiFi6, and the computer terminal may interact with the scanner through a TCP protocol. WiFi6 has a higher bandwidth and a lower latency, and its throughput and PPS are both better. By utilizing a reliable connection and a reliable transmission characteristics of the TCP protocol, a transmission reliability and a stability may be improved. More specifically, a real-time streaming protocol (RTSP) may also be used for the data transmission. The protocol is relatively simple to use and may improve a convenience of the data transmission. It is worth noting that the above-mentioned wireless transmission method is only an exemplary display. In actual applications, other wireless transmission methods are not excluded, and there is no specific limitation on this.

As an example, when the data transmission mode is the wireless transmission, a protocol of the wireless transmission may also be implemented through a telecom operation network, and a satellite positioning system may also be used to provide network signals. A specific implementation of the wireless transmission is not limited.

As an example, an encoding-and-compressing algorithm that is used may be a H.264 compression algorithm, which may improve data compression effects. For example, the data volume may be compressed to a maximum of 10% of an original amount. There is no specific limitation on the algorithm used for encoding and compressing.

In order to achieve a balance between a transmission rate and a data restoration, as an example, during encoding compression, a compression ratio may be: 1/10, 1/5, 1/15 or 1/20. Other compression ratios may also be selected. There is no specific limitation on the selection of the compression ratio.

As an example, image frames in the data that has been stitched may be partially encrypted with 256-bit AES equal-length encryption to prevent the transmitted data from being intercepted. A method of a partial encryption ensures a transmission performance while ensuring a data encryption strength. For example, a single-frame encryption may be implemented in just 50us without affecting a subsequent data transmission.

As an example, when the data transmission mode is switched to the wired transmission, a USB 3.0 protocol may be used for the data transmission, and the wired transmission mode is not specifically limited.

As an example, when the data transmission mode is switched to the wired transmission, a cable that is short may be connected to a rear end of the scanner, and the cable is connected to the computer terminal. One end of the cable and the computer terminal are fixed to an operator, thus avoiding a restraint of a cable that is long.

404, the computer terminal uses the encoded-and-compressed data to perform a three-dimensional reconstruction or to perform a display three-dimensionally to obtain a three-dimensional model of the target object.

As an example, the computer terminal receives the encoded-and-compressed data, and may use the encoded-and-compressed data to decode and restore it for three-dimensional reconstruction or three-dimensional display. For example, the encoded-and-compressed data may be restored by operations such as a decryption, a decode, and a decompression and provided to a subsequent three-dimensional reconstruction algorithm and a texture mapping algorithm, thereby obtaining a three-dimensional model of the target object. It is worth noting that the above-mentioned processing method on the computer terminal is only an example. In actual applications, other processing methods are not excluded, and there is no specific limitation on this.

As an example, the computer terminal may be a computer host or other terminals with computing capabilities, and a specific implementation of the computer terminal is not limited.

As an example, the scanner may also include a wireless AP module, which may be a terminal receiver of wireless signals. The scanner may bind and connect with the wireless AP in a broadcasting method, and then perform the wireless data transmission through a wireless protocol.

As an example, the wireless AP module and the charging module may also be used as independent components to cooperate with the scanner.

As an example, the wireless AP module may be built into the scanner so that the scanner may eliminate an interference from accessories and directly communicate with the computer terminal via the wireless transmission to achieve a wireless scanning function.

As an example, the scanner may also include a display unit, which may realize a display function and an operation function of two-dimensional images and three-dimensional data. Optionally, the display unit may be built into the scanner or placed separately in an area that is visible by the operator, for example, it is fixed to the scanner with a clamp, so as to realize a visualization of an operation control.

As an example, the scanner may also include a touch control unit and a main control unit. The touch control unit may be used to implement operations such as starting/pausing a scanning function, taking a next step of a scanning process, returning to a previous step, and the like, and may send corresponding signals to the main control unit. The main control unit may be used to receive signals sent by the touch operation control unit and perform corresponding operations based on the signals.

As an example, the touch control unit may be a touch panel built into the scanner, and a specific implementation of the touch control unit is not limited.

As an example, the scanner may also have a temperature logic module that is built in, which is used to monitor the temperature of various areas inside the scanner. For example:
It should be noted that, in addition to being applied to the three-dimensional reconstruction scene, the embodiments of the present application may also be applied to other scenes, such as a CT scanning scene, etc., and there is no specific limitation on the application scenes of the embodiments of the present application.

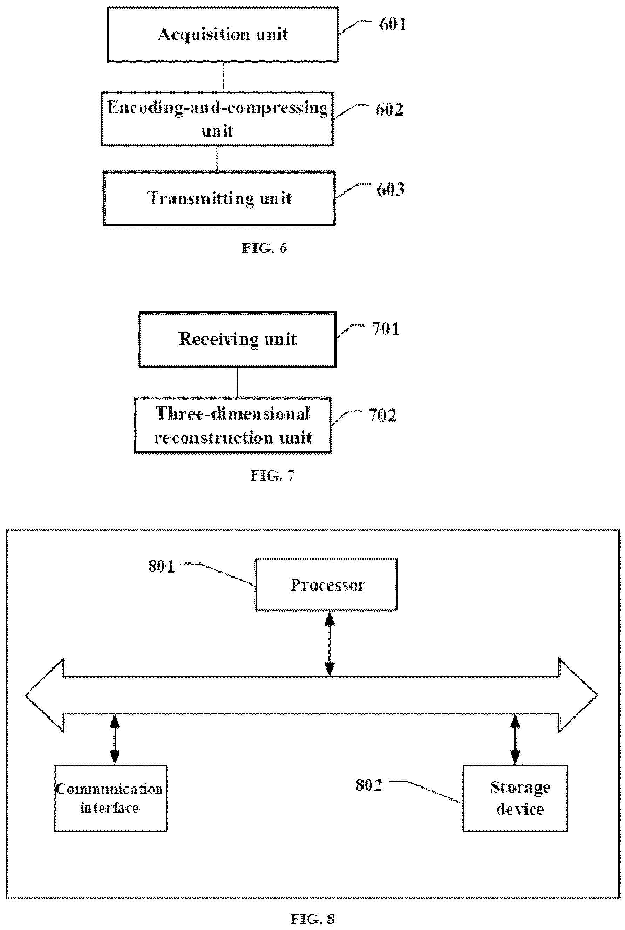

Corresponding to the above-mentioned method embodiment, the present application also provides a three-dimensional reconstruction apparatus, which may switch between the data transmission modes between the three-dimensional reconstruction apparatus and the computer terminal, and the data transmission modes includes the wireless transmission and the wired transmission. As shown in FIG. 6, the apparatus may include: an acquisition unit 601, used to acquire data of the target scene, and the data includes an area of a target object; an encoding-and-compressing unit 602, used to encode and compress the data to obtain the encoded-and-compressed data; a transmitting unit 603, used to send the encoded-and-compressed data to the computer terminal, so that the computer terminal uses the encoded-and-compressed data to perform a three-dimensional reconstruction and obtain a three-dimensional model of the target object.

The present application also provides a three-dimensional reconstruction apparatus, which may switch between data transmission modes between three-dimensional reconstruction apparatus and the scanner, and the data transmission modes include the wireless transmission and the wired transmission. As shown in FIG. 7, the apparatus may include: a receiving unit 701, used to receive the encoded-and-compressed data sent by the scanner, and the encoded-and-compressed data is obtained by the scanner after obtaining the data of the target scene and encodes and compresses the data, and the data includes an area of the target object; a three-dimensional reconstruction unit 702, used to use the encoded-and-compressed data to perform the three-dimensional reconstruction or to perform the display three-dimensionally to obtain the three-dimensional model of the target object.

The present application also provides an electronic device, as shown in FIG. 8, the electronic device includes: a processor 801; a storage device 802 for storing instructions executable by a processor; wherein the processor 801 is configured to implement the three-dimensional reconstruction method described in any of the above embodiments.

The present application also provides a computer-readable storage medium having a computer program stored thereon, and when the computer program is executed by a processor, the three-dimensional reconstruction method described in any one of the above embodiments is implemented.

The above are some embodiments of the present application. It should be pointed out that for the skilled in the art, several improvements and modifications may be made without departing from principles of the present application. These improvements and modifications should also be regarded as a protection scope of the present application.

### Industrial Applicability.

The present application provides a three-dimensional reconstruction method, an apparatus, an electronic device and a computer-readable storage medium. The three-dimensional reconstruction method includes: a scanner acquires data of a target scene, where the data includes an area of a target object; the scanner encodes and compresses the data to obtain encoded-and-compressed data; the scanner sends the encoded-and-compressed data to a computer terminal, so that the computer terminal uses the encoded-and-compressed data to perform a three-dimensional reconstruction or to perform a display three-dimensionally to obtain a three-dimensional model of the target object; the scanner may switch between data transmission modes between the scanner and the computer terminal, where the data transmission modes include a wireless transmission and a wired transmission, which may improve an efficiency of wireless transmission while improving the user experience.

## Claims

1. A three-dimensional reconstruction method, **characterized in that** the method is applied to a scanner capable of switching between data transmission modes between the scanner and a computer terminal, the data transmission modes comprise a wireless transmission and a wired transmission, and the method comprises:
acquiring data of a target scene, the data comprising an area of a target object;
obtaining encoded-and-compressed data by encoding and compressing the data;
transmitting the encoded-and-compressed data to the computer terminal, and enabling the computer terminal to perform a three-dimensional reconstruction using the encoded-and-compressed data or to perform a display three-dimensionally using the encoded-and-compressed data, thereby obtaining a three-dimensional model of the target object.

2. The method according to claim 1, wherein obtaining encoded-and-compressed data by encoding and compressing the data comprises:
obtaining the encoded-and-compressed data by stitching, encoding, and compressing a plurality of frames of data in the data according to a preset time period.

3. The method according to claim 2, wherein the scanner comprises at least two cameras, and the data comprises data acquired by the at least two cameras.

4. The method according to claim 2, wherein the scanner comprises a field programmable gate array (FPGA) chip or a digital signal processor (DSP) chip, and obtaining the encoded-and-compressed data comprises:
obtaining the encoded-and-compressed data, through the FPGA chip or the DSP chip, by extracting, encoding and compressing stripes in the data that have been stitched.

5. The method according to claim 1, wherein the target scene is an oral cavity scene; and the target object comprises at least one of a tooth, a gum or a soft tissue.

6. The method according to claim 1, wherein the scanner comprises a power supply unit, the power supply unit comprises a charging module and a battery module, the charging module is capable of charging the battery module in a wireless charging mode or in a connector charging mode, and the battery module is capable of providing power to the scanner when the scanner is in a non-working state.

7. A three-dimensional reconstruction method applied to a computer terminal, **characterized in that** the computer terminal is capable of switching between data transmission modes between the computer terminal and a scanner, the data transmission modes comprise a wireless transmission and a wired transmission, and the method comprises:
receiving encoded-and-compressed data transmitted by the scanner, the encoded-and-compressed data being obtained by the scanner by acquiring data of a target scene, and encoding and compressing the data by the scanner, the data comprising an area of a target object;
obtaining a three-dimensional model of the target object by performing a three-dimensional reconstruction using the encoded-and-compressed data or to perform a display three-dimensionally using the encoded-and-compressed data.

8. The method according to claim 7, wherein encoding and compressing the data comprises:
stitching, encoding and compressing a plurality of frames of data in the data according to a preset time period.

9. The method according to claim 8, wherein the scanner comprises at least two cameras, and the data comprises data acquired by the at least two cameras.

10. The method according to claim 8, wherein the scanner comprises a field programmable gate array (FPGA) chip or a digital signal processor (DSP) chip, encoding and compressing the data comprises:
extracting, encoding and compressing, by the FPGA chip or by the DSP chip, stripes in the data that have been stitched.

11. The method according to claim 7, wherein the target scene comprises an oral cavity scene;
the target object comprises at least one of a tooth, a gum or a soft tissue.

12. A three-dimensional reconstruction apparatus, **characterized in that** the apparatus is capable of switching between data transmission modes between the three-dimensional reconstruction apparatus and a computer terminal, the data transmission modes comprise a wireless transmission and a wired transmission, and the apparatus comprises:
an acquisition unit, being configured to acquire data of a target scene, the data comprises an area of a target object;
an encoding-and-compressing unit, being configured to encode and compress the data to obtain encoded-and-compressed data;
a transmitting unit, being configured to transmit the encoded-and-compressed data to the computer terminal, and enable the computer terminal to perform a three-dimensional reconstruction using the encoded-and-compressed data or to perform a display three-dimensionally using the encoded-and-compressed data, thereby obtaining a three-dimensional model of the target object.

13. A three-dimensional reconstruction apparatus, **characterized in that** the apparatus is capable of switching between data transmission modes between the three-dimensional reconstruction apparatus and a scanner, the data transmission modes comprise a wireless transmission and a wired transmission, and the apparatus comprises:
a receiving unit, being configured to receive encoded-and-compressed data transmitted by the scanner, the encoded-and-compressed data being obtained by the scanner by acquiring data of a target scene; and encoding and compressing the data by the scanner, the data comprising an area of the target object;
a three-dimensional reconstruction unit, being configured to perform a three-dimensional reconstruction or to perform a display three-dimensionally using the encoded-and-compressed data to obtain a three-dimensional model of the target object.

14. An electronic device, **characterized in that** the electronic device comprises:
a processor;
a storage device, being configured for storing instructions executable by the processor;
the processor is configured to implement the method according to any one of claims 1 to 11.

15. A computer-readable storage medium having a computer program stored thereon, **characterized in that** when the computer program is executed by a processor, steps of the method according to any one of claims 1 to 11 are implemented.
